# EUROPEAN PATENT APPLICATION

(11) **EP 4 563 387 A1**
(43) Date of publication of application: **04.06.2025**
(21) Application number: 23213044.3
(22) Date of filing: 29.11.2023
(51) Int. Cl.: B60L 1/00, B62D 5/04

(54) **STRATEGIES FOR HANDLING THE SYSTEM DYNAMICS IN A BATTERY-LESS LOW VOLTAGE ARCHITECTURE OF AN ELECTRIC VEHICLE**

(71) Applicant: Volvo Car Corporation, 405 31 Göteborg (SE)
(72) Inventor: Narendar, Rao, 417 16 Göteborg (SE); Augustine, Rajiv, 417 67 Göteborg (SE); Ustun, Saglam, 421 73 Göteborg (SE); Rishabh, Jain, 417 20 Göteborg (SE)
(74) Representative: Nederlandsch Octrooibureau

(57) **Abstract**

A low voltage (LV) circuit for mitigating voltage fluctuations caused by energy regeneration of electric vehicles, the LV circuit comprising a control unit configured to receive at least one indication of a regenerative energy from an electric power assisted steering (EPAS) motor and send at least one control signal to control at least one switch such that the regenerative energy is absorbed by a load when at least one indication is larger than a threshold.

## Description

### TECHNICAL FIELD

The invention relates to a low voltage circuit for an electric vehicle.

### BACKGROUND OF THE INVENTION

Since the average range for an electric vehicle (EV) depends on weight of the electric vehicle, there is an increasing demand for reducing weight of the electric vehicle in order to decrease the energy consumption of the electric vehicle, thereby improving the range of the electric vehicle. Typically, the weight of an electric vehicle is reduced by reducing the size of the low voltage (LV) battery in the LV system of the electric vehicle. However, this can result in limitations regarding the absorption of regenerative currents generated by loads in the LV system.

### SUMMARY OF THE INVENTION

None of existing LV circuits of electric vehicles considers the removal of the LV battery due to voltage destabilization. Therefore, it would be advantageous to implement a LV circuit without the LV battery that handles the regenerative currents of loads. Loads can be categorized in two types: key-off loads and key-on loads. A key-off load refers to electric devices that draws current even when the engine of the vehicle is off, for example a radio, windows, and the like. A key-on load refers to electric devices that draw current when the engine is on, for example airbags, Electric Power Assisted Steering (EPAS), and the like. Due to the efficient power electronic topologies with improved loop dynamic responses, the absorption of key-off loads can be achieved. In case of key-on loads like EPAS, the absorption of regenerative current generated by an EPAS motor can be a challenge because this current needs to be consumed in the LV circuit itself, for example, by other loads, to prevent a voltage rise. However, there are many safety critical loads (such as brakes, airbags) that are connected on LV circuit and may be potentially affected by a voltage rise since an increased LV voltage may damage the electric components of the safety critical loads. Therefore, an objective of the invention is to develop a LV circuit that properly handles a regenerative energy of an EPAS motor.

To better address this concern, a first aspect of the invention provides a low voltage (LV) circuit for mitigating voltage fluctuations caused by energy regeneration of electric vehicles. The LV circuit comprises a control unit configured to receive at least one indication of a regenerative energy from an electric power assisted steering, EPAS, motor and send at least one control signal to control at least one switch such that the regenerative energy is absorbed by a load when the at least one indication is larger than a threshold. As mentioned in the background, typical configurations require a LV battery for mitigating voltage fluctuations and handling the regenerative energy of an EPAS motor. The present circuit provides a regenerative energy handling circuit for an electric vehicle that, due to the control of switches between different parts of the LV circuit, is able to not exceed an over voltage (OV) limit of the LV circuit. This specific circuit and switch control provide this regenerative energy handling without a LV battery, thereby providing a lighter LV circuit for an electric vehicle.

According to an embodiment, the at least one indication comprises a first indication and a second indication; wherein the first indication comprises a current (I) or a rate of voltage change over time (dV/dt) and the second indication comprises a voltage (V).

According to an embodiment of the present disclosure, the LV circuit further comprises two subcircuits connected though a first switch among the at least one switch, wherein each subcircuit comprises a DC-DC converter and an EPAS motor which receives power from the DC-DC converter. Such a configuration of two subcircuits allows for providing electric energy to loads from two different and separated paths (DC-DC converters), while allowing protection in case one subcircuit exceeds an over voltage (OV) limit. A DC-DC converter is an electronic circuit or electromechanical device that converts a source of direct current (DC) from one voltage level to another. Optionally, the DC-DC converter of each subcircuit can be a high voltage to low voltage DC-DC converter. Such a configuration allows for connecting the LV circuit with a high voltage (HV) circuit, and thereby energy power can flow from the HV circuit to the LV circuit in order to provide energy power to the EPAS motor.

According to an embodiment, the first switch comprises two back-to-back (B2B) metal-oxide-semiconductor field-effect transistors (MOSFETs) arranged in series. By connecting a pair of MOSFET back-to-back, a bidirectional flow of current is allowed when the B2B MOSFET is switched ON, and a bidirectional flow of voltage is blocked when B2B MOSFET is switched OFF. This bidirectional switch offers several advantages in terms of cost savings and the creation of a more compact switch.

According to an embodiment, each subcircuit comprises a load and a second switch connected in series, wherein the at least one switch comprises the second switch. When the first indication is higher than a first threshold, the control unit is configured to send a first control signal to switch on the first switch and the second switches. When the second indication is higher than a second threshold, the control unit is configured to send a second control signal to switch on at least one of the second switches. When the second indication is higher than a third threshold, the third threshold being lower than the second threshold, the control unit is configured to send a third control signal to switch on only the first switch. By controlling the switching on/off of the first switch and/or second switches, the regenerative energy of an EPAS motor can be absorbed by a load.

According to an embodiment, the LV circuit further comprises a supercapacitor connected to one of the two subcircuits. When the first indication or the second indication is higher than a first threshold, the control unit is configured to send a fourth control signal to switch on the first switch. By using a supercapacitor, more regenerative energy can be absorbed.

According to an embodiment, the load includes at least one of a capacitor.

According to an embodiment, the first DC-DC converter or second DC-DC converter is a bidirectional DC-DC converter. A bidirectional DC-DC converter is a converter that steps up or steps down DC voltage from either side of the converter to the other, offering a great flexibility in power distribution. When the first indication or the second indication is higher than a threshold, the control unit is configured to send a fifth control signal to switch on the first switch and to activate a reverse power flow of the bidirectional DC-DC converter. By using the bidirectional DC-DC converter, the regenerative energy of an EPAS motor can be absorbed by an energy storage element (like a capacitor and a battery) present in a high voltage (HV) circuit of the electric vehicle.

According to an embodiment, the control unit includes at least one of a high pass filter for detecting whether the rate of voltage change over time is higher than a corresponding threshold and a comparator for detecting whether a current or voltage is higher than a corresponding threshold.

A second aspect of the invention provides a method performed by a control unit, the method comprising: receiving at least one indication of a regenerative energy from an electric power assisted steering (EPAS) motor; and sending at least one control signal to control at least one switch such that the regenerative energy is absorbed by a load when at least one indication is larger than a threshold.

The person skilled in the art will understand that the features described above may be combined in any way deemed useful. Moreover, modifications and variations described in respect of the system may likewise be applied to a method.

### BRIEF DESCRIPTION OF THE DRAWINGS

In the following, aspects of the invention will be elucidated by means of examples, with reference to the drawings.
FIG. 1 shows a simplified diagram of a LV circuit.
FIG. 2 shows a first example of a LV circuit.
FIG. 3 shows a flowchart of functioning of a control unit according to the first example.
FIG. 4 shows a diagram circuit of a control unit.
FIG. 5 shows a second example of a LV circuit.
FIG. 6 shows a flowchart of functioning of a control unit according to the second example.
FIG. 7 shows a third example of a LV circuit.
FIG. 8 shows a fourth example of a LV circuit.

### DESCRIPTION

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

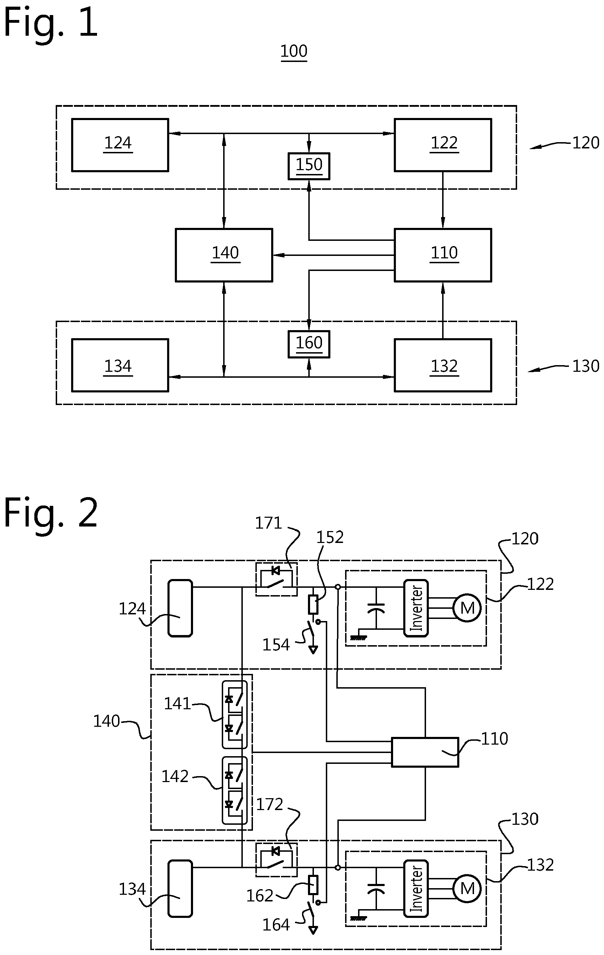

Fig. 1 shows a block diagram of a LV circuit according to the invention. The illustrated LV circuit 100 includes a control unit 110, a first subcircuit 120 and a second subcircuit 130. The first subcircuit 120 and the second subcircuit 130 are connected though a first switch 140. Each subcircuit comprises a DC-DC converter connected to an EPAS circuit. The DC-DC converter provides power to the EPAS circuit, for example, from a high voltage circuit of the electric vehicle. The first subcircuit 120 includes a first DC-DC converter 124 and a first EPAS circuit 122, and the second subcircuit 130 includes a second DC-DC converter 134 and a second EPAS circuit 132. For example, the EPAS circuit may comprise an EPAS motor, an inverter for converting a DC current supplied thought the DC-DC converter into a three-phase AC current for driving the EPAS motor, and a capacitor for providing a stable DC voltage to the inverter. Although, FIG. 2, 5, 6 and 7 shows this exemplary EPAS circuit, it should be noted that any other known EPAS circuit can be used.

Back to FIG, 1, the control unit 110 is configured to receive at least one indication of a regenerative energy from the first EPAS circuit 122 and the second EPAS circuit 132 and send a control signal to control the first switch 140, or to control the first switch 140 and the second switch of the first/second element 150,160 such that the regenerative energy of at least one EPAS motor is absorbed by a load or a capacitor when the regenerative energy is larger than an energy threshold.

Optionally, at least one of the subcircuits 120,130 can include a further element. For example, the first subcircuit 120 can include a first element 150 and the second subcircuit 130 can include a second element 160, both elements 150,160 are configured to absorb the regenerative energy. In this optional case, the first element 150 and the second element 160 both comprise a load and a second switch connected in series. Alternatively, only one of the first element 150 and the second element 160 can be included in the LV circuit for absorbing the regenerative energy. In this case, the first or second element may comprise a supercapacitor. In a further alternative, none of the first element 150 and the second element 160 are present in the LV circuit. In this case, the regenerative energy is transferred to a HV circuit by at least one of the DC-DC converters.

### Example 1

FIG. 2 shows a first example of the LV circuit according to the invention. In this first example, the LV circuit 100 includes a first subcircuit 120 and a second subcircuit 130 connected though two back-to back (B2B) MOSFETs. For example a first B2B MOSFET 141 and a second B2B MOSFET 142.

The first subcircuit 120 includes a first DC-DC converter 124, a first EPAS circuit 122 and a first element 150. The first EPAS circuit 122 comprises a capacitor, an inverter and a first EPAS motor. The first element 150 comprises a first load 152 and a first load switch 154. The second subcircuit 130 includes a second DC-DC converter 134, a second EPAS circuit 132 and a second element 160. The second EPAS circuit 132 comprises a capacitor, an inverter and a second EPAS motor. The second element 160 comprises a second load 162 and a second load switch 164. Optionally, the first load 152 and/or the second load 162 can each comprise one of more loads.

Each DC-DC converter is connected to corresponding EPAS circuit and element through a driving switch circuit 171,172 which comprises a switch and a diode. The diode is configured such that current is allowed to flow from the first EPAS circuit 122 to the first B2B MOSFET 141. The switch is always ON when the electric vehicle is in a driving mode, otherwise it is in OFF. While in driving mode, this ON configuration allows power to flow from the DC-DC converter to the corresponding EPAS circuit and allows regenerative current flows from the corresponding EPAS circuit to the other subcircuit, and vice versa. In the OFF configuration, any regenerative current flows from the corresponding EPAS circuit to the other subcircuit, and vice versa, while no power is provided from the DC-DC converter.

The LV circuit 100 further includes a control unit 110. The control unit 110 is connected to the first B2B MOSFET 141, the second B2B MOSFET 142, the first load switch 154 and the second load switch 164, as well as to each subcircuit 120,130. The control unit 110 is configured to receive at least one indication of a regenerative energy from the first EPAS circuit 122 and the second EPAS circuit 132. Afterwards, based on the received indication(s), the control unit 110 is configured to send a control signal to control the first B2B MOSFET 141, the second B2B MOSFET 142, the first load switch 154 and the second load switch 164 such that the regenerative energy of at least one EPAS motor is absorbed by at least one of the first load 152 and second load 162 when the regenerative energy is larger than an energy threshold.

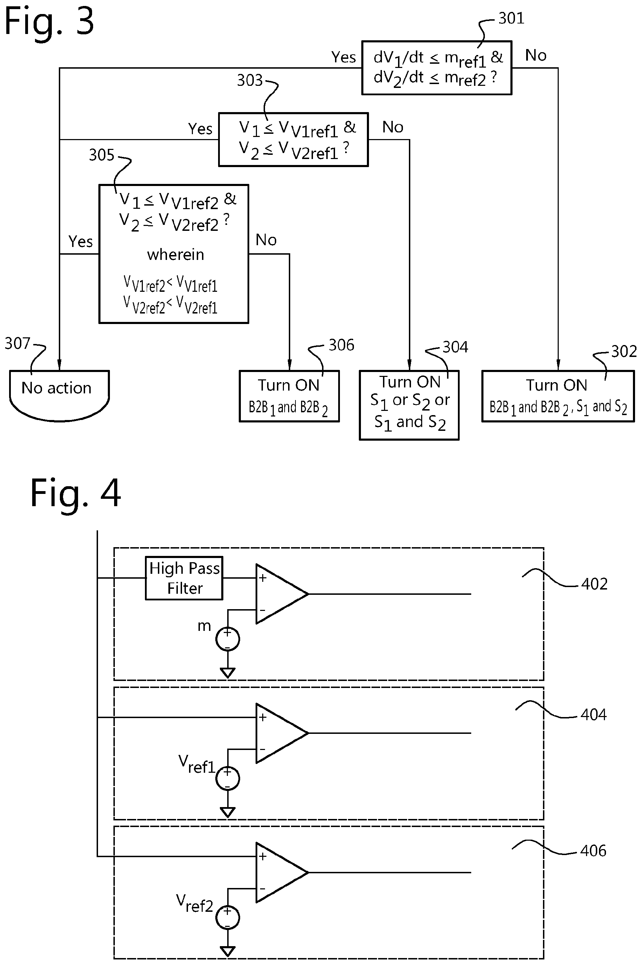

FIG. 3 shows a flowchart of a process of the control unit 110 of the LV circuit of FIG. 2. As previously mentioned, the control unit 110 is configured to receive at least one indication of a regenerative energy from the first EPAS circuit 122 and the second EPAS circuit 132. This indication comprises a rate of voltage change over time (dV/dt) and a voltage (V). That is, the control unit receives, from the first subcircuit 120, an indication of a first rate of voltage change over time (dV₁/dt) and a first voltage (V₁), and from the second subcircuit 130, an indication of a second rate of voltage change over time (dV₂/dt) and a second voltage (V₂).

At step 301, the control unit 110 is configured to check whether the first rate (dV₁/dt) is larger than a first rate threshold (m₁) and the second rate (dV₂/dt) is larger than a second rate threshold (m₂). Optionally, the first rate threshold (m₁) and the second rate threshold (m₂) can have the same value, that is m₁=m₂. When at least one of the first rate (dV₁/dt) and the second rate (dV₂/dt) is larger than a first rate threshold (m₁) and a second rate threshold (m₂), respectively, the process continues at step 302. Otherwise, when the first rate (dV₁/dt) is smaller or equal than the first rate threshold (m₁) and the second rate (dV₂/dt) is smaller or equal than the second rate threshold (m₂), the process continues at step 307. The first rate threshold (m₁) and the second rate threshold (m₂) are set to be lower than a rate limit of corresponding subcircuit.

At step 302, the control unit 110 is configured to send corresponding control signals to switch ON the first B2B MOSFET 141, the second B2B MOSFET 142, the first load switch 154 and the second load switch 164. By turning ON the first B2B MOSFET 141, the second B2B MOSFET 142, the first load switch 154 and the second load switch 164, the regenerative energy of the at least one EPAS motor is absorbed by the first load 152 and second load 162.

At step 303, the control unit 110 is configured to check whether the first voltage (V₁) is larger than a first reference threshold for V₁ (V_{1ref1}) and the second voltage (V₂) is larger than a first reference threshold for V₂ (V_{2ref1}). Optionally, the first reference threshold for V₁ (V_{1ref1}) and the first reference threshold for V₂ (V_{2ref1}) can have the same value, that is V_{1ref1}= V_{2ref1}. When at least one of the first voltage (V₁) and the second voltage (V₂) is larger than the first reference threshold for V₁ (V_{1ref1}) and the first reference threshold for V₂ (V_{2ref1}), respectively, the process continues at step 304. Otherwise, when the first voltage (V₁) is smaller or equal than the first reference threshold for V₁ (V_{1ref1}) and the second voltage (V₂) is smaller or equal than the first reference threshold for V₂ (V_{2ref1}), the process continues at step 307.

At step 304, the control unit 110 is configured to send corresponding control signals to switch ON at least one of the first load switch 154 and the second load switch 164. In the case that the first voltage (V₁) is larger than the first reference threshold for V₁ (V_{1ref1}), the control unit 110 is configured to send a control signal to switch ON the first load switch 154. In the case that the second voltage (V₂) is larger than the first reference threshold for V₂ (V_{2ref1}), the control unit 110 is configured to send a control signal to switch ON the second load switch 164. By turning ON at least one of the first load switch 154 and the second load switch 164, the regenerative energy of the at least one EPAS motor is absorbed by at least one of the first load 152 and second load 162.

At step 305, the control unit 110 is configured to check whether the first voltage (V₁) is larger than a second reference threshold for V₁ (V_{1ref2}) and the second voltage (V₂) is larger than a second reference threshold for V₂ (V_{2ref2}). The first reference threshold for V₁ (V_{1ref1}) is larger than the second reference threshold for V₁ (V_{1ref2}), that is V_{1ref2}< V_{1ref1}; and the first reference threshold for V₂ (V_{2ref1}) is larger than the second reference threshold for V₂ (V_{2ref2}), that is, V_{2ref2}< V_{2ref1}. It should be noted that V_{1ref1} and V_{2ref1} should both be lower than the over voltage (OV) limit of corresponding subcircuit. Optionally, the second reference threshold for V₁ (V_{1ref2}) and the second reference threshold for V₂ (V_{2ref2}) can have the same value, that is V_{1ref2}= V_{2ref2}. When at least one of the first voltage (V₁) and the second voltage (V₂) is larger than the second reference threshold for V₁ (V_{1ref2}) and the second reference threshold for V₂ (V_{2ref2}), respectively, the process continues at step 306. Otherwise, when the first voltage (V₁) is smaller than or equal to the second reference threshold for V₁ (V_{1ref2}) and the second voltage (V₂) is smaller than or equal to the second reference threshold for V₂ (V_{2ref2}), the process continues at step 307.

At step 306, the control unit 110 is configured to send corresponding control signals to switch ON the first B2B MOSFET 141 and the second B2B MOSFET 142. By turning ON the first B2B MOSFET 141 and the second B2B MOSFET 142, the regenerative energy of the at least one EPAS motor is absorbed by the capacitor of the at least one of EPAS circuit.

It should be noted that steps 301, 303 and 305 can be simultaneously performed.

At step 307, when the following three conditions are satisfied, the control unit 110 is configured to not send control signals for switching ON any of the first B2B MOSFET 141, the second B2B MOSFET 142, the first load switch 154 and the second load switch 164. The three conditions are:
(1) the first rate (dV₁/dt) is smaller or equal than the first rate threshold (m₁) and the second rate (dV₂/dt) is smaller or equal than the second rate threshold (m₂);
(2) the first voltage (V₁) is smaller or equal than the first reference threshold for V₁ (V_{1ref1}) and the second voltage (V₂) is smaller or equal than the first reference threshold for V₂ (V_{2ref1}); and
(3) the first voltage (V₁) is smaller than or equal to the second reference threshold for V₁ (V_{1ref2}) and the second voltage (V₂) is smaller than or equal to the second reference threshold for V₂ (V_{2ref2}).

FIG. 4 shows a diagram circuit of a control unit according to the invention, for example the control unit 110 of FIG. 2. For each of the first subcircuit 120 and the second subcircuit 130, the control unit 110 comprises a slope detection circuit 402, a first comparator 404 and a second comparator 406.

The slope detection circuit 402 comprises a high pass filter and a comparator. The high pass filter allows for detecting a high rate of voltage change over time. The comparator is configured to compare the detected high rate of a corresponding subcircuit and corresponding rate threshold, and output a binary signal indicating which one is larger.

The first comparator circuit 404 comprises a comparator configured to compare the indicated voltage (V) of a corresponding subcircuit and corresponding first reference threshold, and output a binary signal indicating which one is larger. In case the indicated voltage (V) is larger than the first reference threshold, the binary signal is "1", and in case the indicated voltage (V) is lower than the first reference threshold, the binary signal is "0".

The second comparator circuit 406 comprises a comparator configured to compare the indicated voltage (V) of the corresponding subcircuit and corresponding second reference threshold, and output a binary signal indicating which one is larger. in case the indicated voltage (V) is larger than the second reference threshold, the binary signal is "1", and in case the indicated voltage (V) is lower than the second reference threshold, the binary signal is "0".

It should be noted that any of the first comparator circuit 404 and the second comparator circuit 406 may further comprise more electronic elements.

### Example 2

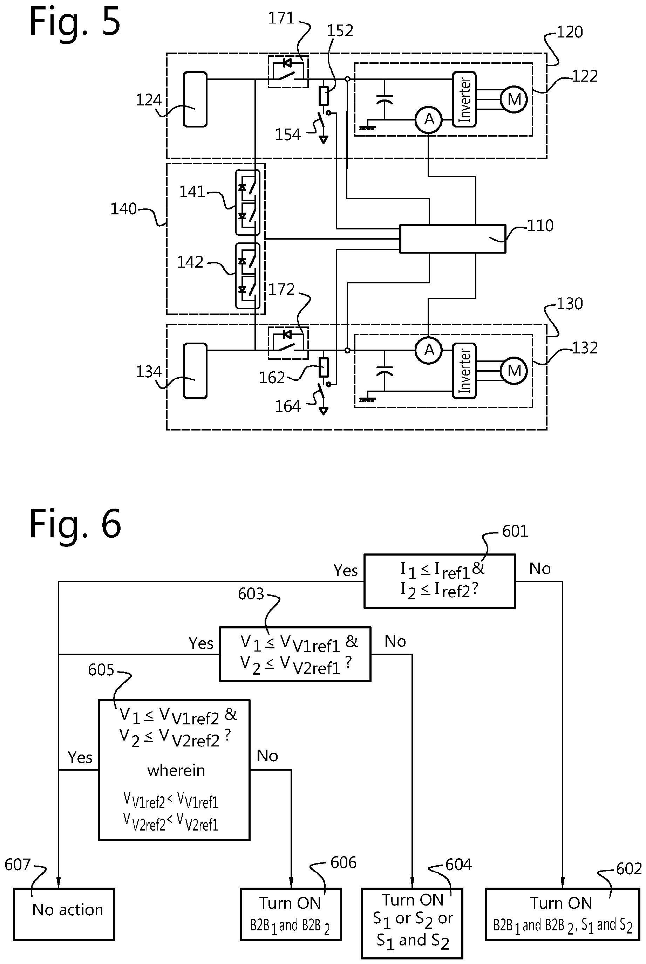

FIG. 5 shows a second example of a LV circuit. In this second example, the LV circuit 100 includes a first subcircuit 120 and a second subcircuit 130 connected though two back-to back (B2B) MOSFETs. As in the LV circuit of FIG 2, each subcircuit includes a DC-DC converter, a EPAS circuit and an element which includes a load and a load switch. In the second example of FIG. 5, each EPAS circuit further includes an amperemeter. The amperemeter is configured to detect a regenerative current (I) of the EPAS motor.

The control unit 110 is configured to receive an indication of a voltage (V) of each EPAS circuit. However, instead of receiving an indication of a rate of voltage change over time (dV/dt) of each circuit as in the first example (see FIG.2), the control unit 110 of the second example, as shown in FIG. 5, is configured to receive an indication of the current (I) of the EPAS circuit. That is, the control unit 110 is configured to receive, from the first subcircuit 120, an indication of a first current (I₁) and a first voltage (V₁), and from the second subcircuit 130, an indication of a current (I₂) and a second voltage (V₂). Afterwards, the control unit 110 sends signals to corresponding switches in order to switch on all or part of the switches such that a regenerative energy of the EPAS motor is absorbed by a load. As in FIG. 2, each DC-DC converter is connected to a corresponding EPAS circuit and element through a driving switch circuit 171,172 which comprises a switch and a diode, wherein the switch is always ON when the electric vehicle is in a driving mode, otherwise it is in OFF.

The activation of the B2B MOSFETSs and the load switches depends on the voltage rise. Voltage is the potential difference between two points in an electric field, which causes current to flow in the circuit. Thus, two points (one in the circuit and another one to ground) are needed for measuring voltage, and only one point (in the circuit) for measuring current. Hence, by measuring the current instead of the rate of voltage change over time (as in the first example), the currents of the EPAS circuit, in this second example, are detected quickly. Therefore, a further improvement in handling of the regenerative energy is provided.

FIG. 6 shows a flowchart of a process of the control unit 110 of the LV circuit of FIG. 5. A process of the control unit 110 of the LV circuit of FIG. 5 is similar to the process in FIG. 3.

At step 601, the control unit 110 is configured to check whether the first current (I₁) is larger than a first current threshold (I_{ref1}) and the second current (I₂) is larger than a second current threshold (I_{ref2}). Optionally, the first current threshold (I_{ref1}) and the second current threshold (I_{ref2}) can have the same value, that is I_{ref1}= I_{ref2}. When at least one of the first current (I₁) and the second current (I₂) is larger than the first current threshold (I_{ref1}) and the second current threshold (I_{ref2}), respectively, the process continues at step 602. Otherwise, when the first current (I₁) is smaller than or equal to the first current threshold (I_{ref1}) and the second current (I₂) is smaller than or equal to the second current threshold (I_{ref2}), the process continues at step 607. The first current threshold (I_{ref1}) and the second current threshold (I_{ref2}) are set to be lower than a current limit of corresponding subcircuit.

At step 602, the control unit 110 is configured to send corresponding control signals to switch ON the first B2B MOSFET 141, the second B2B MOSFET 142, the first load switch 154 and the second load switch 164. By turning ON the first B2B MOSFET 141, the second B2B MOSFET 142, the first load switch 154 and the second load switch 164, the regenerative energy of the at least one EPAS motor is absorbed by the first load 152 and second load 162.

At step 603, the control unit 110 is configured to perform a check on whether the first voltage (V₁) is larger than a first reference threshold for V₁ (V_{1ref1}) and the second voltage (V₂) is larger than a first reference threshold for V₂ (V_{2ref1}). Optionally, the first reference threshold for V₁ (V_{1ref1}) and the first reference threshold for V₂ (V_{2ref1}) can have the same value, that is V_{1ref1}= V_{2ref1}. When at least one of the first voltage (V₁) and the second voltage (V₂) is larger than the first reference threshold for V₁ (V_{1ref1}) and the first reference threshold for V₂ (V_{2ref1}), respectively, the process continues at step 604. Otherwise, when the first voltage (V₁) is smaller than or equal to the first reference threshold for V₁ (V_{1ref1}) and the second voltage (V₂) is smaller than or equal to the first reference threshold for V₂ (V_{2ref1}), the process continues at step 607.

At step 604, the control unit 110 is configured to send corresponding control to switch ON at least one of the first load switch 154 and the second load switch 164. In the case that the first voltage (V₁) is larger than the first reference threshold for V₁ (V_{1ref1}), the control unit 110 is configured to send a control signal to switch ON the first load switch 154. In the case that the second voltage (V₂) is larger than the first reference threshold for V₂ (V_{2ref1}), the control unit 110 is configured to send a control signal to switch ON the second load switch 164. By turning ON only at least one of the first load switch 154 and the second load switch 164, the regenerative energy of the at least one EPAS motor is absorbed by at least one of the first load 152 and second load 162.

At step 605, the control unit 110 is configured to check whether the first voltage (V₁) is larger than a second reference threshold for V₁ (V_{1ref2}) and the second voltage (V₂) is larger than a second reference threshold for V₂ (V_{2ref2}). The first reference threshold for V₁ (V_{1ref1}) is larger than the second reference threshold for V₁ (V_{1ref2}), that is V_{1ref2}< V_{1ref1}; and the first reference threshold for V₂ (V_{2ref1}) is larger than the second reference threshold for V₂ (V_{2ref2}), that is, V_{2ref2}< V_{2ref1}. It should be noted that V_{1ref1} and V_{2ref1} should be both lower than the over voltage (OV) limit of the corresponding subcircuit. Optionally, the second reference threshold for V₁ (V_{1ref2}) and the second reference threshold for V₂ (V_{2ref2}) can have the same value, that is V_{1ref2}= V_{2ref2}. When at least one of the first voltage (V₁) and the second voltage (V₂) is larger than the second reference threshold for V₁ (V_{1ref2}) and the second reference threshold for V₂ (V_{2ref2}), respectively, the process continues at step 606. Otherwise, when the first voltage (V₁) is smaller than or equal to the second reference threshold for V₁ (V_{1ref2}) and the second voltage (V₂) is smaller than or equal to the second reference threshold for V₂ (V_{2ref2}), the process continues at step 607.

At step 606, the control unit 110 is configured to send corresponding control signals to switch ON only the first B2B MOSFET 141 and the second B2B MOSFET 142. By turning ON only the first B2B MOSFET 141 and the second B2B MOSFET 142, the regenerative energy of the at least one EPAS motor is absorbed by the capacitor of the at least one of EPAS circuits.

At step 607, when the following three conditions are satisfied, the control unit 110 is configured to not send control signals for switching ON any of the first B2B MOSFET 141, the second B2B MOSFET 142, the first load switch 154 and the second load switch 164. The three conditions are:
1) the first current (I₁) is smaller than or equal to the first current threshold (I_{ref1}) and the second current (I₂) is smaller than or equal to the second current threshold (I_{ref2});
(2) the first voltage (V₁) is smaller or equal than the first reference threshold for V₁ (V_{1ref1}) and the second voltage (V₂) is smaller or equal than the first reference threshold for V₂ (V_{2ref1}); and
(3) the first voltage (V₁) is smaller than or equal to the second reference threshold for V₁ (V_{1ref2}) and the second voltage (V₂) is smaller than or equal to the second reference threshold for V₂ (V_{2ref2}).

### Example 3

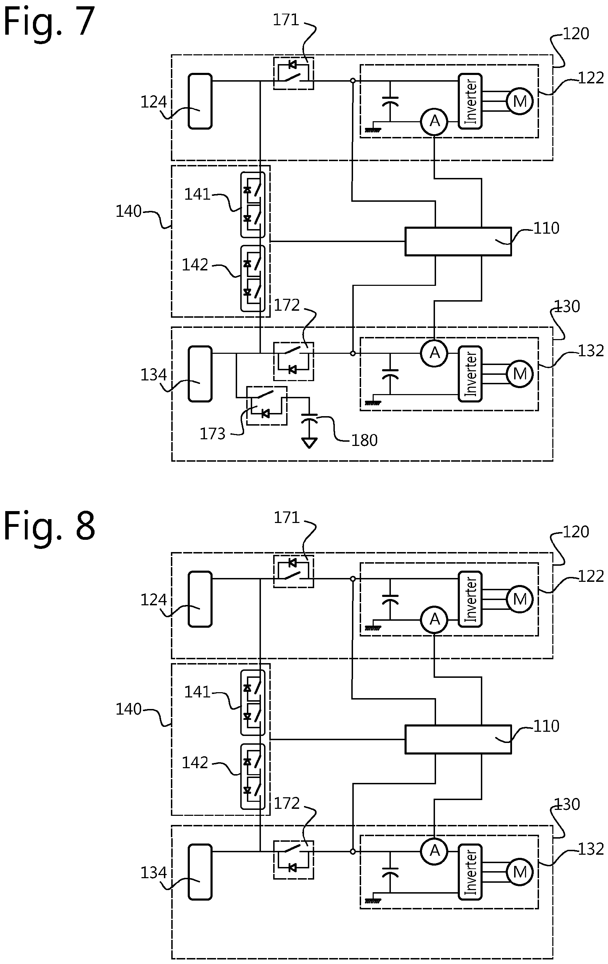

FIG. 7 shows a third example of a LV circuit. In this third example, the LV circuit 100 includes a first subcircuit 120 and a second subcircuit 130 connected though two back-to back (B2B) MOSFETs. As in the LV circuit of FIG 5, each subcircuit includes a DC-DC converter and a EPAS circuit with an amperemeter. However, in the LV circuit of FIG. 7, none of the first subcircuit 120 and second subcircuit 130 includes a load and a load switch. Instead, the second subcircuit 130 includes a supercapacitor 180. A further driving switch circuit 173 is connected in series with the supercapacitor. This further driving switch circuit 173 is always ON when the electric vehicle is in the driving mode.

The control unit 110 is configured to receive an indication of a current (I) through the amperemeter or a voltage (V) of each EPAS circuit. That is, the control unit 110 is configured to receive, from the first subcircuit 120, an indication of a first current (I₁) or a first voltage (V₁), and from the second subcircuit 130, an indication of a current (I₂) or a second voltage (V₂).

In case of receiving a current indication of the first subcircuit 120 and the second subcircuit 130, the control unit 110 is configured to check whether the first current (I₁) is larger than a first current threshold (I_{ref1}) and the second current (I₂) is larger than a second current threshold (I_{ref2}). Optionally, the first current threshold (I_{ref1}) and the second current threshold (I_{ref2}) can have the same value, that is I_{ref1}= Iref2.

When at least one of the first current (I₁) and the second current (I₂) is larger than the first current threshold (I_{ref1}) and the second current threshold (I_{ref2}), respectively, the control unit 110 is configured to send corresponding control signals to switch ON the first B2B MOSFET 141 and the second B2B MOSFET 142. By turning ON the first B2B MOSFET 141 and the second B2B MOSFET 142, the regenerative energy of the at least one EPAS motor is absorbed by the supercapacitor 180.

In case of receiving a voltage indication of the first subcircuit 120 and the second subcircuit 130, the control unit 110 is configured to check whether the first voltage (V₁) is larger than a reference threshold for V₁ (V_{1ref}) and the second voltage (V₂) is larger than a reference threshold for V₂ (V_{2ref}). Optionally, the reference threshold for V₁ (V_{1ref}) and the reference threshold for V₂ (V_{2ref}) can have the same value, that is V_{1ref}= V_{2ref}. When at least one of the first voltage (V₁) and the second voltage (V₂) is larger than the reference threshold for V₁ (V_{1ref}) and the reference threshold for V₂ (V_{2ref}), respectively, the control unit 110 is configured to send corresponding control signals to switch ON the first B2B MOSFET 141 and the second B2B MOSFET 142. By turning ON only the first B2B MOSFET 141 and the second B2B MOSFET 142, the regenerative energy of the at least one EPAS motor is absorbed by the supercapacitor 180.

Although, in the third example, the EPAS circuit may include an amperemeter for detecting the regenerative current of the EPAS motor, an EPAS circuit without the amperemeter is also disclosed. In this case, the control unit 110, instead of being configured to receive a current (I) or a voltage (V), can be configured to receive a rate of voltage change over time (dV/dt) of each EPAS circuit.

### Example 4

FIG.8 shows a fourth example of a LV circuit. In this fourth example, the LV circuit 100 includes a first subcircuit 120 and a second subcircuit 130 connected though two back-to back (B2B) MOSFETs. As in the LV circuit of FIG 5, each subcircuit includes a DC-DC converter and a EPAS circuit with an amperemeter. However, in the LV circuit of FIG. 8, none of the first subcircuit 120 and second subcircuit 130 includes a load and a load switch. Instead, the first DC-DC converter or second DC-DC converter is a bidirectional DC-DC converter.

The control unit 110 is configured to receive an indication of a current (I) through the amperemeter or an indication of a voltage (V) of each EPAS circuit. That is, the control unit 110 is configured to receive, from the first subcircuit 120, an indication of a first current (I₁) or a first voltage (V₁), and from the second subcircuit 130, an indication of a current (I₂) or a second voltage (V₂).

In case of receiving a current indication of the first subcircuit 120 and the second subcircuit 130, the control unit 110 is configured to check whether the first current (I₁) is larger than a first current threshold (I_{ref1}) and the second current (I₂) is larger than a second current threshold (I_{ref2}). Optionally, the first current threshold (I_{ref1}) and the second current threshold (I_{ref2}) can have the same value, that is I_{ref1}= Iref2.

When at least one of the first current (I₁) and the second current (I₂) is larger than the first current threshold (I_{ref1}) and the second current threshold (I_{ref2}), respectively, the control unit 110 is configured to send corresponding control signals to switch ON the first B2B MOSFET 141 and the second B2B MOSFET 142.

In case of receiving a voltage indication of the first subcircuit 120 and the second subcircuit 130, the control unit 110 is configured to check whether the first voltage (V₁) is larger than a reference threshold for V₁ (V_{1ref}) and the second voltage (V₂) is larger than a reference threshold for V₂ (V_{2ref}). Optionally, the reference threshold for V₁ (V_{1ref}) and the reference threshold for V₂ (V_{2ref}) can have the same value, that is V_{1ref}= V_{2ref}. When at least one of the first voltage (V₁) and the second voltage (V₂) is larger than the reference threshold for V₁ (V_{1ref}) and the reference threshold for V₂ (V_{2ref}), respectively, the control unit 110 is configured to send corresponding control signals to switch ON the first B2B MOSFET 141 and the second B2B MOSFET 142.

By turning ON the first B2B MOSFET 141 and the second B2B MOSFET 142, the regenerative energy of the at least one EPAS motor reaches the bidirectional DC-DC converter. Then, based on the voltage sensed by the bidirectional DC-DC converter and the set point of the bidirectional DC-DC converter, the bidirectional DC-DC converter activates the reverse power flow. That is, if the voltage sensed is larger than the set point, then the bidirectional DC-DC converter activates its reverse power flow, allowing the bidirectional DC-DC converter to transfer DC voltage from the LV circuit to a HV circuit (not shown). This transferred voltage is then absorbed by a capacitor of the HV circuit of the electric vehicle.

Although, in the third example, the EPAS circuit may include an amperemeter for detecting the regenerative current of the EPAS motor, an EPAS circuit without the amperemeter is also disclosed. In this case, the control unit 110, instead of being configured to receive a current (I) or a voltage (V), can be configured to receive a rate of voltage change over time (dV/dt) of each EPAS circuit.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A low voltage, LV, circuit (100) for mitigating voltage fluctuations caused by energy regeneration of electric vehicles, the LV circuit comprising:
- a control unit (110) configured to receive at least one indication of a regenerative energy from an electric power assisted steering, EPAS, motor and send at least one control signal to control at least one switch (140,154,164) such that the regenerative energy is absorbed by a load when the at least one indication is larger than a threshold.

2. The LV circuit of claim 1,
- wherein the at least one indication comprises a first indication and/or a second indication; and
- wherein the first indication comprises a current or a rate of voltage change over time and the second indication comprises a voltage.

3. The LV circuit of claim 1 or 2, further comprising two subcircuits (120,130) connected through a first switch (140) among the at least one switch, wherein each subcircuit (120,130) comprises a DC-DC converter (124,134) and an EPAS motor which receives power from the DC-DC converter.

4. The LV circuit of claim 3, wherein the first switch (140) comprises two B2B MOSFETs (141,142) arranged in series.

5. The LV circuit of claim 4, wherein each subcircuit (120,130) further comprises the load (152,162) and a second switch (154,164) connected in series, and wherein the at least one switch comprises the second switch.

6. The LV circuit of claim 5, wherein when the first indication is higher than a first threshold, the control unit (110) is configured to send a first control signal to switch on the first switch (140) and each of the second switches (154,164).

7. The LV circuit of claim 5, wherein when the second indication is higher than a second threshold, the control unit (110) is configured to send a second control signal to switch on at least one of the second switches (154,164).

8. The LV circuit of claim 7, wherein when the second indication is higher than a third threshold, the third threshold being lower than the second threshold, the control unit is configured to send a third control signal to switch on only the first switch (140).

9. The LV circuit of claim 4 further comprising a super capacitor connected to one of the two subcircuits, and wherein the load includes at least one of a capacitor.

10. The LV circuit of claim 9, wherein when the first indication or the second indication is higher than a threshold, the control unit is configured to send a fourth control signal to switch on the first switch.

11. The LV circuit of claim 4, wherein the first DC-DC converter or second DC-DC converter is a bidirectional DC-DC converter.

12. The LV circuit of claim 11, wherein when the first indication or the second indication is higher than a threshold, the control unit is configured to send a fifth control signal to switch on the first switch and to activate a reverse power flow of the bidirectional DC-DC converter.

13. The LV circuit of any preceding claim, wherein each DC-DC converter is a high voltage to low voltage DC-DC converter.

14. The LV circuit of any preceding claim, wherein the control unit includes at least one of a high pass filter for detecting whether the rate of voltage change over time is higher than a corresponding threshold and a comparator for detecting whether a current or voltage is higher than a corresponding threshold.

15. A method performed by a control unit (110), the method comprising:
- receiving at least one indication of a regenerative energy from an electric power assisted steering, EPAS, motor; and
- sending at least one control signal to control at least one switch such that the regenerative energy is absorbed by a load when the at least one indication is larger than a threshold.
